# EUROPEAN PATENT APPLICATION

(11) **EP 3 254 590 A1**
(43) Date of publication of application: **13.12.2017**
(21) Application number: 17000987.2
(22) Date of filing: 09.06.2017
(51) Int. Cl.: A47J 43/08

(54) **GEAR DRIVE CONTAINER**

(30) Priority: 10.06.2016 US 201662348299 P
(71) Applicant: Vita-Mix Management Corporation, Olmsted Township, OH 44138 (US)
(72) Inventor: Kolar, David J., Stow, OH 44224 (US); Boozer, Richard D., Wakeman, OH 44889 (US); Mehlman, Fred, Brunswick, OH 44212 (US); Hammond, Rebecca L., Olmsted Township, OH 44138 (US)
(74) Representative: Müller-Boré & Partner Patentanwälte PartG mbB

(57) **Abstract**

A blender system may include a base including a motor, a container, and a blade assembly. The blade assembly may include a gear drive. The gear drive may include an input and an output. The input may receive a drive shaft of a motor. The output may drive blades of a blade assembly. The gear drive may alter a rotational speed of the blades relative to a speed of the drive shaft of the motor.

## Description

### TECHNICAL FIELD

The present invention relates to a blender system and, more particularly, to a container having a blade assembly that includes a gear drive.

### BACKGROUND

Blender systems are often used to blend and process foodstuffs. Conventional blenders generally include a base with a motor, a mixing container with an operable mixing blade disposed therein. A blender lid is adapted to cover the mixing container. A user inserts contents within the mixing container to be mixed by the rotation of the blade. The container is positioned on the base as a user controls the operation of the motor within the base to rotate the mixing blade within the container to mix the contents therein.

Blender systems may include a cooling fan attached to and controlled by the motor. The motor may also operatively drive the mixing blade. The speed of the fan may be dependent on the speed of the mixing blade. Some foodstuff may comprise relatively thick products. These include milkshakes, smoothies, nut butters, and the like. In other examples, users may overload containers with ingredients. A user may desire to lower the speed of the blender while mixing one of these products. Reducing the speed of the blades also reduces the speed of the fan, while the motor works to spin the blades in the thick product.

Therefore, there is a need for improved blender systems. For instance, blender systems that allow a fan to operate at different speeds than the blade assembly.

### SUMMARY

The following presents a summary of this disclosure to provide a basic understanding of some aspects. This summary is intended to neither identify key or critical elements nor define any limitations of embodiments or claims. Furthermore, this summary may provide a simplified overview of some aspects that may be described in detail in other portions of this disclosure.

A blender system may include a blender container, a blade assembly, and a blender base. Foodstuff may be inserted into the blender container. The blender base, via a motor, may drive the blade assembly to blend foodstuff within the blender container. The blade assembly may comprise a gear drive that includes one or more gears that alter the rotational speed of blades relative to the rotational speed of the motor. The altered speed may allow for an increased number of speed options, altered airflow within the blender container, reduced noise, increased user satisfaction, and the like.

A blender container includes side walls, a bottom wall, and a blade assembly. The blade assembly includes a gear drive. The gear drive receives input and alters a rotational speed of an output shaft. The blender container may rotate blades at a different speed than a speed at which a motor rotates a fan.

The following description and the drawings disclose various illustrative aspects. Some improvements and novel aspects may be expressly identified, while others may be apparent from the description and drawings.

### DESCRIPTION OF THE DRAWINGS

The present teachings may be better understood by reference to the following detailed description taken in connection with the following illustrations, wherein.
FIG. 1 is a partial, cross-sectional view of a a blade assembly comprising a gear drive in accordance with the present disclosure;
FIG. 2 is a partial, cross-sectional view of a blade assembly comprising the gear drive of FIG. 1 and a container in accordance with the present disclosure;
FIG. 3 is a top, perspective view of a blade assembly including a gear drive in accordance with various disclosed aspects;
FIG. 4 is a bottom view of a blade assembly including a gear drive in accordance with various disclosed aspects;
FIG. 5 is an exploded view of a blade assembly including a gear drive in accordance with various disclosed aspects;
FIG. 6 is a partial, cross-sectional view of a blender system including a blade assembly comprising a gear drive and a blender base that operatively drives blades of the blade assembly in accordance with the present disclosure;
FIG. 7 is a perspective view of a container for a blender system in accordance with the present disclosure; and
FIG. 8 is a partial cross-sectional view of a single serving blender container in accordance with the present disclosure.

### DETAILED DESCRIPTION

Reference will now be made in detail to embodiments of the present teachings, examples of which are illustrated in the accompanying drawings. It is to be understood that other embodiments may be utilized and structural and functional changes may be made without departing from the scope of the present teachings. Moreover, features of the embodiments may be combined, switched, or altered without departing from the scope of the present teachings, e.g., features of each disclosed embodiment may be combined, switched, or replaced with features of the other disclosed embodiments. As such, the following description is presented by way of illustration and does not limit the various alternatives and modifications that may be made to the illustrated embodiments and still be within the spirit and scope of the present teachings.

As used herein, the words "example" and "exemplary" mean an instance, or illustration. The words "example" or "exemplary" do not indicate a key or preferred aspect or embodiment. The word "or" is intended to be inclusive rather an exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

"Logic" refers to any information and/or data that may be applied to direct the operation of a processor. Logic may be formed from instruction signals stored in a memory (e.g., a non-transitory memory). Software is one example of logic. In another aspect, logic may include hardware, alone or in combination with software. For instance, logic may include digital and/or analog hardware circuits, such as hardware circuits comprising logical gates (e.g., AND, OR, XOR, NAND, NOR, and other logical operations). Furthermore, logic may be programmed and/or include aspects of various devices and is not limited to a single device.

It is noted that references to a blender, blender system, and the like, are understood to include food processor systems, and other mixing systems. Such systems generally include a blender base that may include a motor, a blade assembly, and a controller. Further, such systems may include a container, a display, a memory and/or a processor. A blade assembly, a blending container, and a blender base may removably or irremovably attach. The blending container may be powered in any appropriate manner, such as disclosed in U.S. Patent Application No. 14/213,557, entitled Powered Blending Container, which is hereby incorporated by reference.

Furthermore, while blending of "ingredients," "contents" or "foodstuffs" is described by various embodiments, it is noted that non-food stuff may be mixed or blended, such as paints, epoxies, construction material (e.g., mortar, cement, etc.), and the like. Moreover, blending of ingredients may result in a blended product. Such blended products may include drinks, frozen drinks, smoothies, shakes, soups, purees, sorbets, butters (nut), dips or the like. Accordingly, such terms may be used interchangeably unless context suggests otherwise or warrants a particular distinction among such terms. Further, such terms are not intended to limit possible blended products and should be viewed as examples of possible blended products.

In embodiments, the blender systems may include any household blender and/or any type of commercial blender system, including those with covers that may encapsulate or partially encapsulate the blender. Commercial blender systems may include an overall blender system, such as a modular blender system that may include the blender along with other components, such as a cleaner, foodstuff storage device (including a refrigerator), an ice maker and/or dispenser, a foodstuff dispenser (a liquid or powder flavoring dispenser) or any other combination of such.

As used herein, the phrases "blending process," "blending program," and the like are used interchangeably unless context suggest otherwise or warrants a particular distinction among such terms. A blending process may comprise a series or sequence of blender settings and operations to be carried out by the blending device. In an aspect, a blending process may comprise at least one motor speed and at least a one-time interval for the given motor speed. For example, a blending process may comprise a series of blender motor speeds to operate the blender blade at the given speed, a series of time intervals corresponding to the given motor speeds, and other blender parameters and timing settings. The blending process may further include a ramp up speed that defines the amount of time the motor takes to reach its predetermined motor speed or a ramp down speed to reduce the motor speed. The blending process may be stored on a memory and recalled by or communicated to the blending device.

Described blender systems may include interlocking mechanisms that may selectively prevent or allow operation of a motor or blades based on whether portions of the blender systems are appropriately connected. It is noted that the interlocking mechanisms may include manual components (e.g., push rods, etc.), magnetic components (e.g., reed switch), wireless or wired components (e.g., NFC tags, etc.), or the like. Move over, various components of the blender system may include an NFC tag or component. It is noted that embodiments may utilize other radio frequency identification (RFID) devices, transponders, or tags. Accordingly, embodiments reference NFC for brevity, but such embodiments may utilize other RFID devices, methods, or systems. An NFC tag may include a memory that operatively stores identification information that defines a make, model, or type of a component (e.g., a particular type of container). NFC tags may store other information and may be coupled with sensors.

Some traditional blender systems include a container that connects to a blender base. The blender base may include a motor that drives blades disposed in the container. The motor also drives fan blades that force air into the blender base to cool the motor. When a user wants to adjust the speed of the blades, the user may lower or raise the motor speed. This also lowers or raises the speed of the fan blades. In an example, users may overload a container, load a container with a particularly thick product, or utilize the container for a blending process that does not require high speeds. This may develop a relatively high torque, with respect to other processes or ingredients, on the motor when operating. This increased torque may cause excess heat in or about the motor. If the user lowers the motor speed, the fan speed also lowers while the motor drives the blade through the thick ingredients. This may cause some traditional blender systems to overheat, or not function at a desired efficiency or level of performance.

Moreover, traditional blender systems may include stored blender programs. These blender programs may be configured for specific types of foodstuff and particular blending containers. As such, users may not be able to use the blender programs for different types of containers and maintain efficiency of blender operations.

Embodiments described herein provide a blender system that may address these and other issues. For instance, a blender system may comprise a blender base, a container, and a blade assembly. The blade assembly may be attached (e.g., removably or irremovably) to the container, such that blades of the blade assembly are operatively disposed within the container. The blade assembly may include a drive spline that may be driven by a motor of the blender base. In another aspect, the blade assembly may include one or more gears (e.g., a gear drive) that alter the input speed received from the motor for the output speed for the blades. In an aspect, the gear drive may receive a first rotational speed input from the drive spline, and may reduce the speed such that the blades operate at a lower speed than the drive spline. In an aspect, the speed of the motor may remain relatively greater than the speed of the blades. This may allow a fan that may be connected to the motor to operate at a different (e.g., higher) speed than the blades. The higher speed may allow for an increased speed of the fan relative to the speed of the blades, which may reduce the operating temperature of the blender. Reducing the operating temperature may reduce the likelihood of a thermal shut-off, which may be implemented to turn off the motor and prevent damage from overheating.

In an aspect, the driven-to-drive ratio of the gear drive may be about an x: 1 ratio, where x is a number. For instance, exemplary embodiments may comprise a 2.25:1, 2.5:1, 2.8:1, 3:1 or other gear reduction from input to output ratio as described herein. According to various other examples, x may be generally greater than 1 and less than about 5, at or between 2 and 3.5, or the like. In at least one embodiment, the maximum input speed may be about 22,500 RPM and the maximum input torque may be about 240 newton meters (e.g., oz. * in) - although the present teachings are not limited to this configuration. As described herein, the gear drive may include a planetary gear drive or train, such as an epicyclical gear train. A *k-*level epicyclical gear train, where k is a number, may include one or more outer gears, or planet gears, revolving about a central, or sun gear, and an outer ring gear or annulus, which meshes with the planet gears. As an example, embodiments may include a dual ratio gear set comprising a two-level epicyclical gear train.

The gear drive may reduce the output speed or speed of blades, while allowing the motor to maintain a higher speed. This may allow for increased airflow within the blender container, increased efficiency of blending, or the like.

In another aspect, the gear drive may effectively increase the number of available speeds of a blade assembly. It is noted that aspect, the blade assembly may be utilized with existing or legacy blender bases or containers. Moreover, the blade assembly may allow for blending of very thick items more efficiently, such as blending of nut butters, smoothies with hard ice, viscous smoothies, or the like. Embodiments may also allow for different blending operations or programs. For example, embodiments may allow a blender to chop or dice foodstuff. All of this may be accomplished while allowing more airflow to reduce the likelihood of the blender overheating.

Further still, the disclosed embodiments may allow use of a compression device during the blending operation. By way of a non-limiting example a blending volume reducing device, such as that disclosed in U.S. Patent Application No. 14/826,975, entitled Blending Volume Reducing Device, which is hereby incorporated by reference, may be utilized with a container having the present gear drive. In such embodiments, the blending volume reducing device may reduce the working volume of the container - it may compress the foodstuffs to be blended. To effectively blend the foodstuffs with the blending volume reducing device may require additional power from the motor. The present gear drive may allow the blades to rotate at a slower speed than the motor. This may allow the motor to maintain an operative temperature, maintain a more efficient blade speed, reduce pressure within the container, or otherwise as described herein. For instance, embodiments may reduce current draw, situations in comparison with systems that do not use aspects disclosed herein, from the motor in tough blending. In an example, a working volume in a container may be reduced by inserting a compressor or volume reducing device such as those described in U.S. Patent Application No. 14/826,975, entitled Blending Volume Reducing Device, the entirety of which is incorporated by reference herein, in the container. The reduced working volume may cause a motor to pull increased current so that a desired speed is maintained. This increased current may trip circuit breakers, which may be comprised within the motor. Disclosed embodiments may utilize a gear drive to adjust the speed of a blade assembly while reducing the current pull of a motor.

While embodiments may refer to a container comprising or attaching to a particular blade assembly, it is noted that containers may be interchangeable with different blade assemblies. For instance, a container may be operatively attached to a first blade assembly with a gear drive, and the blade assembly may be interchangeable with a second blade assembly without a gear drive and/or with a different gear drive. In some embodiments, containers and blade assembly combinations may not be interchangeable. For instance, some attachments or containers require different gear ratios, and the performance of the attachment will depend on a particular gear ratio. Thus, specific attachments may be sub-optimized if the gear ratio is common or not designed for the specific attachment. Accordingly, attachments may include gear drives having particular ratios selected for a particular attachment that may be particularly suited for a specific application. It is noted that mechanical features may prevent a particular attachment from attaching to a particular gear ratio. In another aspect, blender interlocks (e.g., include NFC interlocks, reed switches, and the like) may identify whether the attachments are sub-optimized and may alert a user or prevent operation of the blender system.

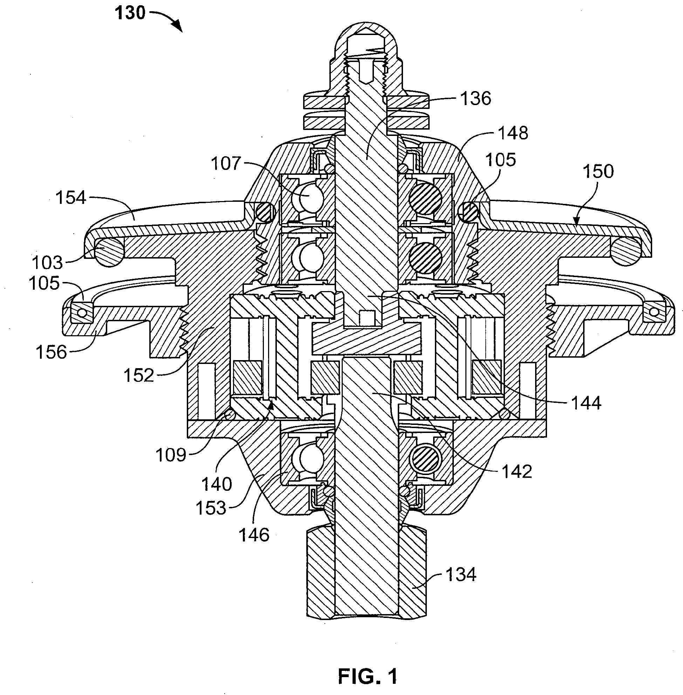

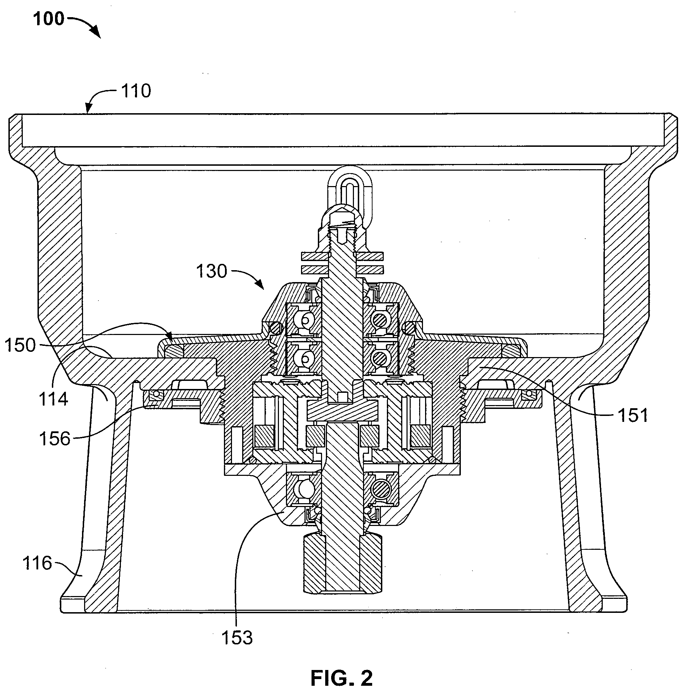

Referring now to FIG. 1, there is a cross-sectional view of a blender system 100 that may include a container 110 and a blade assembly 130. FIG. 2 is a cross-sectional view of the blade assembly 130. In an aspect, the blender system 100 may increase efficiency, reduce overheating, or otherwise provide improvements over other blender systems. It is noted that various improvements are disclosed herein.

The container 110 may be of any operable shape, size, or configuration. For instance, container 110 may comprise a pitch, cup, bowl, or other shape. While container 110 is depicted as comprising sidewalls 112, a closed end 114, and an apron 116, it is noted that various other arrangements may be utilized. For instance, single serving-style containers (e.g., those with blade assemblies that attach to an open end spaced away from a closed end) may utilize various disclosed aspects. As such, it is noted that the container 110 is provided as an exemplary embodiment. In at least one embodiment, blade assembly 130 may be disposed at or attached to the closed end 114 of the container 110. For instance, blade assembly 130 may be positioned such that foodstuff may be forced towards blades 132 of the blade assembly 130.

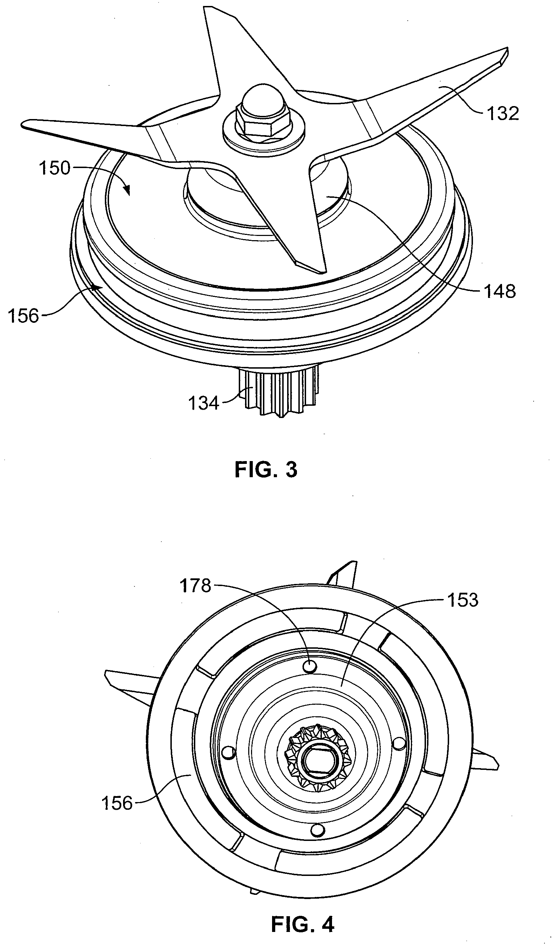

Turning to FIGs. 3-5, with reference to FIGs. 1-2, there are various views of the blade assembly 130 of blender system 100. In an aspect, the blade assembly 130 may include a gear drive 140 having an input 142 and an output 144. The input 142 may receive or comprise drive shaft (e.g., a splined shaft) 134, and the output 144 may receive or comprise a blade shaft 136 that operatively drive the blades 132. The gear drive 140 may be disposed between a first or bottom bearing housing 146 and a second or top bearing housing 148. Each of the bottom bearing housing 146 and the top bearing housing 148 may comprise one or more ball bearings 147. The ball bearings 147 may reduce or prevent wobble of the blade assembly 130.

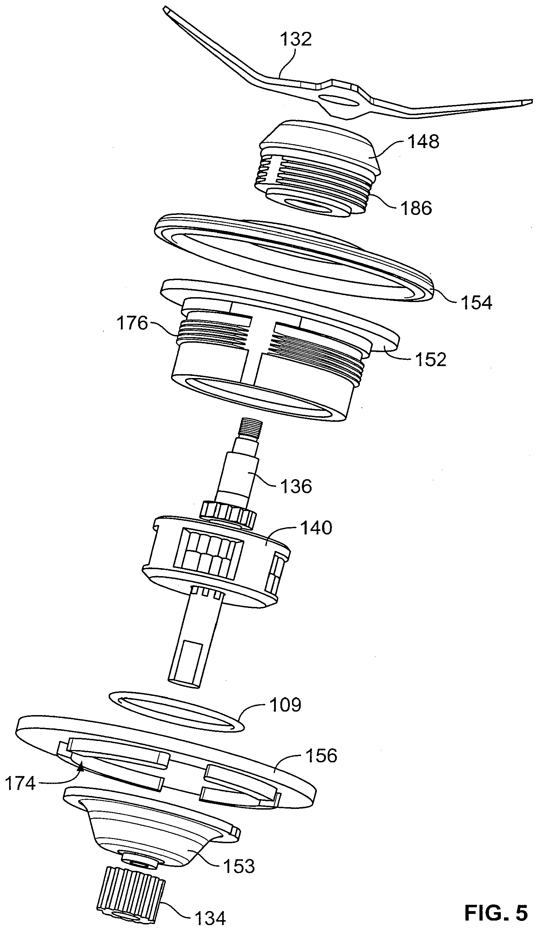

It is noted that various described components may be of a single, unitary construction or may comprise a plurality of components assembled together. For instance, splined shaft 134 may comprise multiple components assembled together, as shown in FIG. 5. It is further noted that components shown as separate constructions, may comprise a single component that may be assembled, formed of a single piece, or the like.

The blade assembly 130 may include a center gear housing 150, which may be unitarily formed or formed by one or more pieces. Center gear housing 150 may extend through a container opening. A shield member 154 may be disposed above the center gear housing 150. In an aspect the center gear housing 150 and the shield member 154 may be attached together by mechanical, chemical or other means. In another aspect, center gear housing 150 and shield member 154 may be unitarily formed.

The top portion 154 may comprise a ledge that contacts the container bottom 114. Center gear housing 150 may generally support gear drive 140, bottom bearing housing 146 and top bearing housing 148. In another aspect, center gear housing 150 may be received by and/or mounted to the container 110 via a retainer nut 156. In an example, center gear housing 150 may attach to retainer nut 156 via a threaded connection, couplers (e.g., screws, bolts, latches, etc.), adhesives, magnetic connections, or the like. A retainer plate 153 may operatively hold the center gear housing 150 and/or retainer nut 156 together.

It is noted that the center gear housing 150 may not be directly screwed, bolted, or fastened to the container. For instance, the center gear housing may be held in place via a friction fit, a separate component, or the like. The lack of fasteners may reduce vibrations with respect to blending apparatuses that include such fasteners. In another aspect, the center gear housing may comprise an elastomeric material that may be compressed against the container. The compression may reduce noise and vibration. In another aspect, the blender system 100 may include one or more gaskets disposed between various components. For instance, a gasket 103 may be disposed between the top portion 154 and one or more of the closed end 114 or bottom portion 152. In another aspect, one or more gaskets 103 may be disposed between the top bearing housing 148 and the center gear hosing 150. The gaskets 103/107, for instance, may generally absorb vibrations, create a seal, or may dampen perceivable noise.

According to various embodiments, the center gear housing 150 may comprise one or more materials and may include food-grade materials. Center gear housing 150 may be compression fit on the closed end 114 with the retainer nut 156. The retainer nut 156 may include one or more gaskets 105. Center gear housing 150 and retainer nut 156 may be attached together and may comprise the gasket 103 and gasket 105. In an aspect, the compression may allow for reduction in weight compared to other systems. In various embodiments, the size of the center gear housing 150 (e.g., diameter of the top portion or shield member 154 may distribute pressure across a larger surface area compared to other systems. It is noted that the size of the retainer nut 156 may distribute pressure along a larger surface area.

The compression by the retainer nut 156 and the center gear housing 150 may stabilize or reduce wobble of the blade assembly 130. A reduction in wobble (e.g., any movement other than rotational movement) may reduce noise in comparison with blade assemblies that do not comprise center gear housing 150.

In various aspects, retainer nut 156 may be coupled to center gear housing 150 via fasteners, threaded members, friction fit, or the like. For instance, retainer nut 156 may include threads (not shown) disposed on an internal surface 174 of the retainer nut 156. The center gear housing 150 may include threads 176 that may operatively mate with threads of the retainer nut 156. The center gear housing 150 may, in another aspect, include a second set of threads (not shown) that may mate with threads 186 of bearings housing 148 (which may include a housing and ball bearings). Retainer plate 153 may operatively engage with at least one of center gear housing 150 or retainer nut 156 via one or more fasteners or the like. In an aspect, a gasket 109 may be disposed between the retainer plate 153 and one or more of the gear drive 140 or the center gear housing 150. For instance, retainer plate 153 may receive one or more fasteners 178 (e.g., screws, bolts, clips, etc.). The fastener 178 may fasten the retainer plate 153 to the retainer nut 156 and/or center gear housing 150. In at least one embodiment, the fastener 178 fastens the retainer plate 153 directly to the retainer nut 156 and not to the center gear housing 150. According various aspects, the arrangements of retainer nut 156, center gear housing 150 and the retainer plate 153 may reduce vibrations when the blade assembly 130 is in operation. Reduced vibrations may produce less noise.

It is noted that the blade assembly 130 may comprise different components (e.g., more, less, or disparate) components. In examples, the couplings, bearings, colors, center gear housings, or the like may be altered according to container type, blender base, or the like. As such, various modifications are within the scope and spirit of this disclosure.

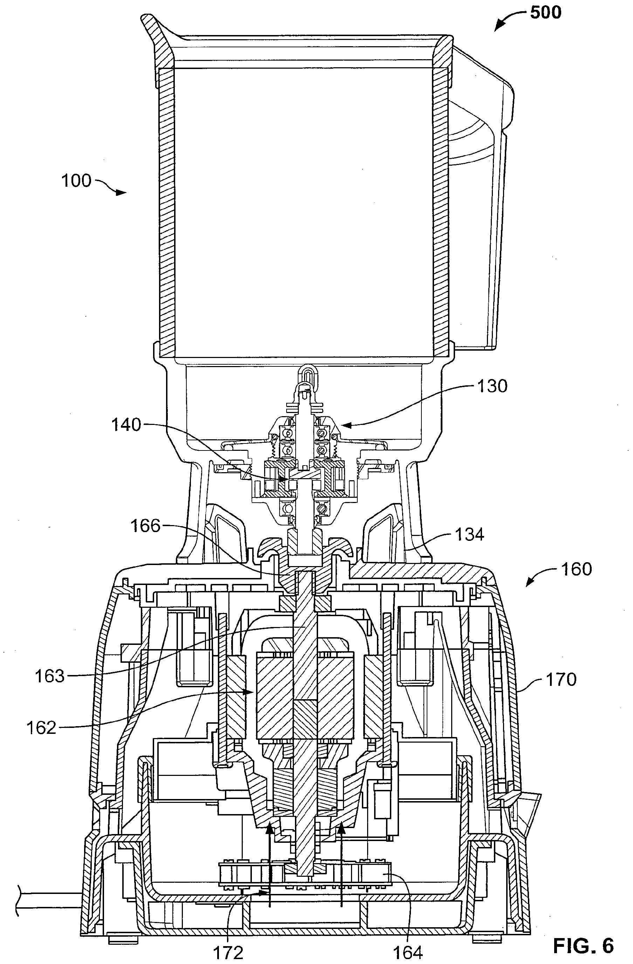

As shown in FIG. 6, container 110 may be operatively attached or coupled to a blender base 160. The blender base 160 may include a motor 162, fan 164, and/or other operative elements disposed within a housing 170. The motor 162 may drive a fan 164 and a splined coupler 166 (which may drive the splined shaft 134 of the blade assembly 130). The fan 164 operatively forces air (not shown) through at least a portion of the housing 170 and/or motor 162. The embodiment shown in Figure 5 is merely exemplary. The present teachings may include a blender base having a fan positioned above the motor driving air in a direction opposite to that shown in Figure 5. Moreover, the fan and motor may not be operatively coupled together. The fan may be driven by a different power source than the motor. Further still, the motor may be of any appropriate configuration, such as a brushed motor or brushless motor.

In an aspect, the gear drive 140 may alter (e.g., reduce, increase) an output speed or torque of the output 144 relative to the input 142. The motor 162 operatively drives the splined coupler 166 to cause the blades 132 to rotate. More particularly, the motor 162 causes rotation of the splined coupler 166. The splined coupler 166 may cause rotation of the splined shaft 134. The input 142 may receive the splined shaft 134. The input 142 causes rotation of one or more gears within the gear drive 140. For instance, the gear drive 140 may comprise one or more planetary gears (not shown) that revolve around a central or sun gear (not shown). The planetary gears may drive a ring gear (not shown) or other gear(s), which may drive output 144. In an example, gear drive 140 may include one or more sun gears, planet gears, housings, ball bearings and the like. For instance, gear drive 140 may include two sun gears, two two-stage planets and a supportive housing containing eight ball bearings. In another example, a gear drive 140 may comprise one sun gear, and four planetary gears.

The gear drive 140 may reduce the rotation speed between the output 144 and the input 142 at a ratio of x:1 (e.g., 2, 2.5, 3, 4, etc.). It is noted that various ratios may be selected based on a desired operation. This ratio will result in an altered (e.g., reduce, increase) speed of blades 132 relative to a speed of the fan 164 if the fan 164 is also driven by the motor 162.

In an example, a user may place contents within container 110. The contents may be more than recommended, combined to have a relatively thick consistency (e.g., nut butters, frozen drinks, etc.), or the like. In certain instances, the user may want to reduce the blade speed. If a user utilized a blender system including the fan 164 that is driven by the motor 162 via a drive shaft 163, then the fan 164 speed would also be reduced. Blender system 100 allows the user to blend at a lower speed, while the fan 164 maintains a higher speed.

In another example, the gear drive 140 may be integrally assembled with the container 110 and/or blade assembly 130. This may allow a proper gear ratio for the specific container and/or blade assembly. For example, certain containers or other attachments may be designed for specific speeds. Using a different gear drive (e.g., different gear ratio) for the container or attachment may result in a more efficient blending process, as opposed to using the same ratio for every container/attachment.

It is further noted that the container 110 and/or blade assembly 130 may comprise an identification token that identifies the container 110 and/or blade assembly 130. Identifying the container 110 and/or blade assembly 130 may allow the blender base 160, another device, or a user to determine at what speeds to operate the blade assembly 130, whether components of the blender system 100 are desirably connected, or whether desired gear drives are combined with an appropriate container 110 or other component.

In an example, a user may utilize blender system 100 but may not know or may not realize that the gear drive 140 operatively reduces the output speed of the blades 132. Thus, the user may attempt to lower the speed of the blades 132. The identification token may provide information that may indicate the operable speeds for the blade assembly 130.

In an embodiment, the identification token may comprise indicia that is printed, etched, or otherwise displayed on the container 110 and/or blade assembly 130. In another example, the identification token may comprise a mechanical feature, information encoded on a memory (e.g., via an RFID tag, NFC tag, etc.), or other component that may communicate with blender base 160. For instance, the blender base 160 may include a first NFC component (not shown) that may communicate with a second NFC component of the container 110 and/or blade assembly 130. The second NFC component may provide information to the blender base 160 via the first NFC component. In an example, the information may be utilized to control (e.g., allow, prevent, etc.) or indicate (e.g., via a display, lights, sound, etc.) the blending speeds or programs that may be designed for the specific container 110 and/or blade assembly 130.

In another aspect, an NFC component disposed in the blade assembly 130 and/or container 110 may communicate with an NFC component disposed within the blender base 160 to identify a state of the blender system 100. For instance, the blender system 100 may be configured such that the NFC component disposed in the blade assembly 130 and/or container 110 only communicates with the NFC component disposed with in the blender base 160 when the blender system 100 is operatively interlocked.

According to various embodiments, the blender system 100 may include physical stops or mechanical components that may prevent certain undesired combination of blade assembly 130, gear drive 140, container 110, or base 160. For instance, a blade assembly 130 having gear drive 140 may be operatively configured such that it may not be coupled to certain makes and models of containers and/or bases. This may prevent a user from mixing the blade assembly 130 with undesired components.

In at least one embodiment, the blender system 100 may include a gear drive (not shown) disposed between the motor 162 and the fan 164. The gear drive may operatively convert input from the drive shaft 163 of the motor to an output speed for the fan 164. In an aspect, the driven-to-drive ratio of the gear drive may be about an 1:y ratio, where y is a number generally greater than 1. As an example, y may be 2, 2.5, 2.8, 3, or the like. In other examples, the ratio may be 1:3, 1:2.5, 1:2.8, or the like. This may allow the fan 164 to be driven at a speed that is greater than the speed of the drive shaft 163 and/or the speed of the blades 132. It is noted that embodiments may include the drive shaft 140, a drive shaft for the fan, or both.

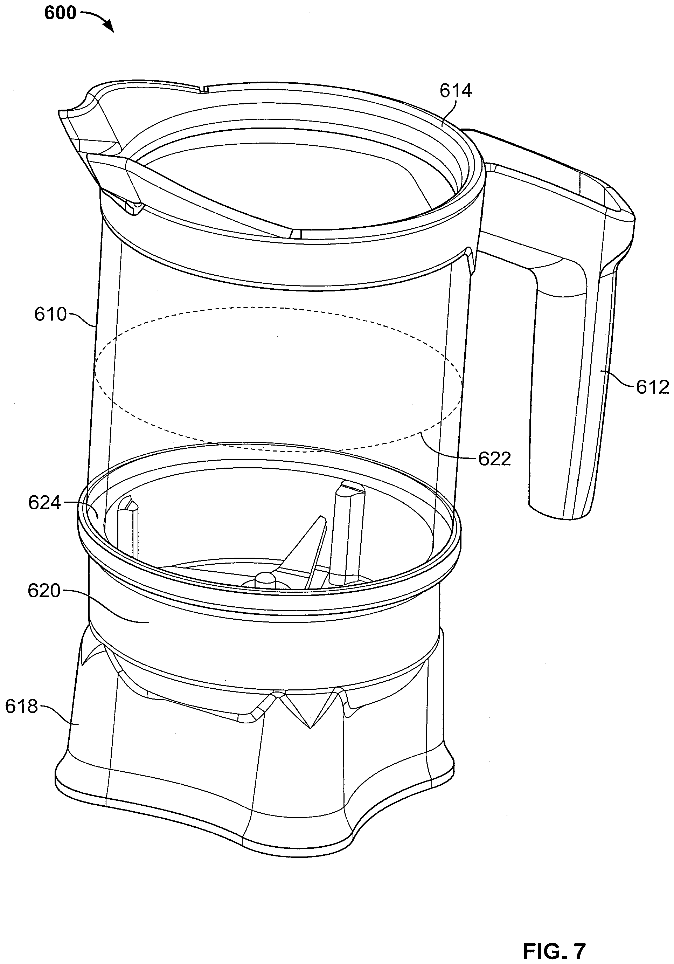

Turning now to FIG. 7, there is a container 600 according to various disclosed embodiments. Container 600 may be any appropriate size and shape, such as generally cylindrical, square, a combination thereof, etc. For instance, container 600 may be 64 oz., 48 oz., 32 oz. or the like. The container 600 may have various components, such as notches and measurements to assist with the production of food products.

The blending container 600 may include sidewall 610 that may comprise a double-wall construction, a single-wall construction, or the like. In another aspect, the sidewall 610 may comprise one or more materials, such as any suitable glass, metal, or plastic materials (e.g., a polymer material, polycarbonate or BPA (bisphenol-a) free plastics), such as by way of a non-limiting example, Tritan. A handle 612 may protrude from the sidewall 610. Handle 612 may comprise any appropriate shape and type. The handle 612 may be a low profile handle made of plastic, including, without limitation a portion of which may be formed of thermoplastic polyurethane (TPU) and the remaining portion may be formed from a plastic such as a polymer material, polycarbonate or BPA (bisphenol-a) free plastic. At least one part of handle 612 may make up at the same surface level of lip 614. In another embodiment, handle 612 is at a different level than the level of the lip 614. Handle 612 may be formed with a generally geometric shape, have ergonomic benefits, contain a grip portion, or contain any combination thereof.

The container 600 may include an apron 618 at its base or closed end 620. The apron 618 may be sized and shaped to operatively engage a base of a blending system. The apron 618 may further include one or more components, such as a sensor and a locking mechanism, to provide a safety lock. In an aspect, sidewalls 610 may extend between the apron 618 or closed end 620 to the lip 614. The sidewall 610 may be generally normal to the horizon. For instance, the sidewall 610 may comprise approximately a zero degree slant (e.g., generally between -5 and +5 degree slant). While shown as generally cylindrical, it is noted that sidewall 610 may comprise various other shapes, such as generally n-sided polygonal prism (where n is a number), an irregular shape, or the like.

According to embodiments, an inner perimeter 622 of the sidewall 610 may be generally uniform along the length of the sidewall. For example, the inner perimeter 622 may comprise generally the same dimensions along a substantial portion of the sidewall. In at least one embodiment, the sidewall 610 may be configured to receive a tamper, compressor, lid, or other component within the inner perimeter 622 of the sidewall 610. The component may comprise a shape that fits within the sidewalls 610 and may seal, friction fit, or otherwise fit within the side wall 610. For instance, the component may comprise a volume reducing device or compressor. The compressor may be inserted within the container 600 and may be position able between the lip 614 and the closed end 620. In an aspect a stop 624 may protrude from the sidewall 610 to generally prevent the compressor from contacting a blade assembly (e.g., blade assembly 130).

In an aspect, the compression of foodstuff within the container 600 may reduce a working volume within the container 600. Operation of a blade assembly within the working volume may impart heat into foodstuff. As the working volume is reduced, the pressure within the blending container may increase. Accordingly, container 600 may include a blade assembly comprising a gear drive (e.g., blade assembly 130 and gear drive 140). The gear drive may reduce the speed of rotation, which may reduce the amount of heat imparted into foodstuff by rotation of the blade assembly. In an aspect, the reduced speed may reduce the heat and pressure within the container 600.

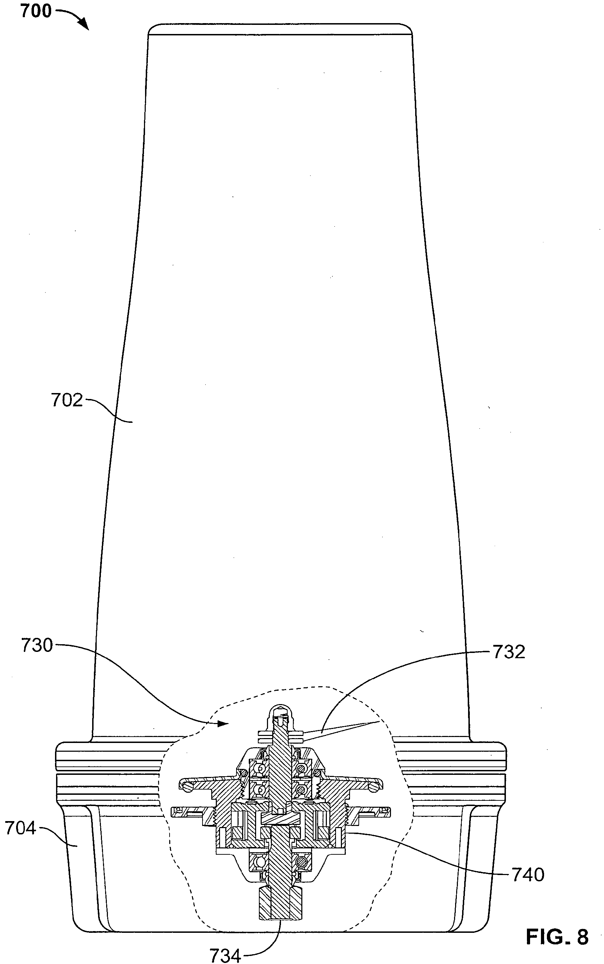

With reference now to FIG. 8, there is a blending container 700 that may operatively attach to a blender base (e.g., blender base 160). The blending container 700 may comprise a single serving blending container 700 that may operatively include a cup 702 and a blade base 704. In an aspect, the blade base 704 may include blade assembly 730. The blade assembly 730 may primarily include a splined shaft 734, a gear drive 740 and blades 732.

In an example, a user may place foodstuff within the cup 702. The user may then attach the blade base 704 to the cup. For instance, the cup 702 and blade base 704 may be attachable via splines (e.g., screw like splines), fasteners, magnets, or the like. The user may then invert the cup 702 and attached blade base 704 (e.g., to the position shown in FIG. 8) and may place the cup 702 and blade base 704 on a blender base. The blender base may drive the blade assembly 730 via the splined shaft 734. The gear drive 740 may alter (e.g., reduce, increase, etc.) the output parameters of the blade assembly 730 relative blade assemblies within the gear drive 740. For example, the gear drive 740 may reduce the output speed to reduce the speed of the blades 732. In an aspect, the gear drive 740 may allow the blender container 700 to be utilized with a blender base that may also operatively drive a larger format blender container.

As described here as well as elsewhere in this disclosure, the blender container 700 may include an identification token, such as and NFC component (not shown). The identification token may be disposed in the cup 702, blade base 704, partly in both, or the like. For instance, the NFC component may identify a type, make, model, operating parameters, or the like for the blender container 700. A blender base, or other device, may include an NFC component that operatively communicates with the NFC component of the blender container 700. In an example, the blender base (via an NFC component) may communicate with the NFC component of the blender container 700. The blender base may operatively enable or disable blending programs based on received identification information.

While embodiments described reducing the speed of blades via a gear drive of a blade assembly, it is noted that other embodiments may operatively increase the speed of the blades relative to the fan. For instance a gear drive (not shown) may operatively drive the fan 164. In an aspect, the gear drive may receive input from the motor 162, and may drive the fan 164. In this manner, the gear drive may increase the speed for fan 164. This may accelerate a blending process while potentially reducing the tax on the motor.

What has been described above includes examples of the present specification. It is, of course, not possible to describe every conceivable combination of components or methodologies for purposes of describing the present specification, but one of ordinary skill in the art may recognize that many further combinations and permutations of the present specification are possible. Each of the components described above may be combined or added together in any permutation to define embodiments disclosed herein. Accordingly, the present specification is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional

## Claims

1. A blade assembly for a blender system comprising:
one or more blades coupled to a blade shaft;
a gear drive operatively driving the blade shaft; and
an input shaft extending from the gear drive and operatively driven by a motor.

2. The blade assembly of claim 1, wherein the gear drive operatively reduces a speed of the blade shaft relative a speed of the input shaft.

3. The blade assembly of claim 1 or 2, wherein the gear drive comprises a driven-to-drive ratio of x:1, wherein x is about or is between 2 and 3.5.

4. The blade assembly of any of claims 1 to 3, wherein the gear drive comprises one or more planetary gears.

5. The blade assembly of any of claims 1 to 4 further comprising one or more bearings disposed about at least one of the input shaft or the blade shaft.

6. The blade assembly of any of claims 1 to 5 wherein the output gear drive is coupled to the blade shaft.

7. The blade assembly of any of claims 1 to 6 further comprising a center gear housing operatively coupling the blade shaft to a blender container and
further preferably comprising a collar operatively attachable to the center gear housing.

8. A blender system for blending foodstuff, the blender system comprising:
a base comprising a motor and a splined coupler;
a container; and
a blade assembly comprising:
one or more blades operatively disposed within the container;
a gear drive;
a blade shaft coupled to an output of the gear drive; and
a drive shaft coupled to an input of the gear drive;
wherein the splined coupler operatively drives the drive shaft, and
wherein the gear drive converts the rotational speed of the drive shaft to drive the blade shaft at a different rotational speed than a rotational speed of the drive shaft.

9. The blender system of claim 8, wherein the blender base includes a fan that is operatively driven by the motor and
wherein the motor preferably operatively drives the fan at the rotational speed of the drive shaft.

10. The blender system of claim 8 or 9 further comprising another gear drive operatively coupled to the drive shaft between the fan and the motor,
wherein the gear drive increases the speed of the fan relative the speed of the drive shaft

11. The blender system of any of claims 8 to 10, wherein the gear drive comprises a driven-to-drive ratio of 2.8:1.

12. The blender system of any of claims 8 to 11, wherein the container comprises a side wall, a lip and a bottom wall,
wherein the sidewall extends between the bottom wall and the lip,
wherein the sidewall is preferably generally normal with a horizontal plane and
wherein the sidewall is preferably generally cylindrical.

13. A blender container for receiving foodstuffs, the blender container comprising:
a sidewall;
a bottom wall;
wherein the side wall and the bottom wall define a cavity of the blender container; and
a blade assembly operatively coupled to the bottom wall, the blade assembly comprising:
at least one blade disposed within the cavity;
a blade shaft operatively coupled with the at least one blade; and
a gear drive.

14. The blender system of claim 13, wherein an output of the gear drive is operatively coupled with the blade shaft and an input of the gear drive is operatively coupled to a splined shaft that operatively receives input from a motor of a blender device.

15. The blender system of claim 13 or 14, wherein the gear drive operatively reduces a rotational speed of the blade shaft relative a rotational speed of the splined shaft and wherein the blade assembly preferably further comprises a center gear housing, and
wherein the center gear housing preferably operatively supports at least a portion of the gear drive.
